# EUROPEAN PATENT APPLICATION

(11) **EP 4 016 395 A1**
(43) Date of publication of application: **22.06.2022**
(21) Application number: 21207635.0
(22) Date of filing: 10.11.2021
(51) Int. Cl.: G06N 3/04, G06N 3/063, G06N 3/08, G06N 3/00

(54) **SYNAPSE CIRCUIT FOR THREE-FACTOR LEARNING**

(30) Priority: 12.11.2020 EP 20306366
(71) Applicant: Commissariat à l'Energie Atomique et aux Energies Alternatives, 75015 Paris (FR); Universität Zürich, 8006 Zürich (CH)
(72) Inventor: DALGATY, Thomas, 38054 Grenoble Cedex 09 (FR); VIANELLO, Elisa, 38054 Grenoble Cedex 09 (FR); INDIVERI, Giacomo, 8057 Zürich (CH); PAYVAND, Melika, 8057 Zürich (CH); DEMIRAG, Yigit, 8045 Zürich (CH); MORO, Filippo, 38054 Grenoble Cedex 09 (FR)
(74) Representative: Cabinet Beaumont

(57) **Abstract**

The present disclosure relates to a synapse circuit of a spiking neural network comprising: at least one resistive switching memory device (404, 406) having a conductance that decays over time; and at least one programming circuit configured to store an eligibility trace by programming a resistive state of the at least one resistive memory device.

## Description

### Technical field

The present disclosure relates generally to the field of artificial neural networks, and in particular to a synapse circuit of a spiking neural network.

### Background art

Artificial neural networks, such as spiking neural networks, are computing architectures that are developed to mimic, to a certain extent, neuro-biological systems. Such neural networks generally comprise a network of artificial neurons, which are electrical circuits that receive inputs, combine these inputs with their internal state and often with a threshold, and produce an output signal. Outputs of neurons are coupled to the inputs of other neurons by connections, which are referred to as synapses, their equivalent in the biological brain.

In a spiking neural network, signals, sometimes in the form of spikes, produced by source neurons are transmitted to one or more synapse circuits. Each synapse circuit stores a gain factor, or weight, which is applied to the signal from the source neuron in order to increase or decrease its strength, before it is conveyed to one or more post-synaptic neurons. The function used to generate the input to a post-synaptic neuron, based on the outputs of its predecessor neurons and the connections as a weighted sum, is known as the propagation function.

Early models of synaptic plasticity in the brain focused mainly on correlation-based learning, where the weight applied by each synapse circuit was changed depending on the pre- and post-synaptic activity. However, more recent experimental results highlight the fact that changes in synaptic efficacy of many synapses also depend on neuro-modulatory signals such as dopamine or acetylcholine. This suggests that novel learning models should take into account these mechanisms by implementing rules that amplify, or depress, or even invert, synaptic weight changes.

Learning rules of this kind can be classified as three-factor learning rules, where in addition to the pre- and post-synaptic activity, a reward/neuromodulator acts as a third factor.

However, there is a technical difficulty providing a compact and low-cost implementation allowing such learning rules to be applied.

### Summary of Invention

It is an aim of embodiments of the present disclosure to at least partially address one or more needs in the prior art.

According to one embodiment, there is provided a synapse circuit of a spiking neural network comprising: at least one resistive switching memory device having a conductance that decays over time; and at least one programming circuit configured to store an eligibility trace by programming a resistive state of the at least one resistive memory element.

According to one embodiment, the at least one programming circuit is configured to store the eligibility trace by programming a resistive state of the at least one resistive switching memory device in response to the occurrence of a pre-synaptic spike or a post-synaptic spike.

According to one embodiment, the synapse circuit further comprises a further resistive memory element configured to store a synaptic weight, and the at least one programming circuit is further configured to update the synaptic weight in response to an update signal, the synaptic weight being updated as a function of a measured resistance of the or each resistive memory element.

According to one embodiment, the at least one programming circuit is configured to store the eligibility trace by programming a first of the at least one resistive switching memory device to store a positive correlation trace and a second of the at least one resistive switching memory device to store a negative correlation trace.

According to one embodiment, the at least one resistive switching memory device is a phase-change memory device.

According to one embodiment, the at least one resistive switching memory device is a conductive-bridging random-access memory device.

According to a further aspect, there is provided a spiking neural network comprising a plurality of pre-synaptic neurons each coupled to at least one post-synaptic neuron via a corresponding synapse circuit implemented as above.

According to a further aspect, there is provided a method comprising storing, by at least one programming circuit, an eligibility trace associated with a synapse circuit of a spiking neural network using at least one resistive switching memory device having a conductance that decays over time.

According to one embodiment, storing the eligibility trace comprises programming a resistive state of the at least one resistive switching memory device in response to the occurrence of a pre-synaptic spike or a post-synaptic spike.

According to one embodiment, the method further comprising storing a synaptic weight to a further resistive memory element, and updating the synaptic weight in response to an update signal as a function of a measured resistance of the or each resistive memory element.

According to one embodiment, storing the eligibility trace comprises programming a first of the at least one resistive switching memory device to store a positive correlation trace and a second of the at least one resistive switching memory device to store a negative correlation trace.

### Brief description of drawings

The foregoing features and advantages, as well as others, will be described in detail in the following description of specific embodiments given by way of illustration and not limitation with reference to the accompanying drawings, in which:
Figure 1 schematically illustrates part of an artificial neural network comprising PRE neurons and POST neurons coupled together by synapses;
Figure 2 schematically illustrates a three-factor learning process according to an example embodiment;
Figure 3 is a timing diagram illustrating the generation of an eligibility trace and of a synapse weight according to an example embodiment;
Figure 4 schematically illustrates part of a spiking neural network comprising an array of synapse circuits according to an example embodiment of the present disclosure;
Figure 5 is a timing diagram illustrating the generation of an eligibility trace and of a synapse weight according to an example embodiment of the present disclosure;
Figure 6 is a flow diagram illustrating operations in a method of generating an eligibility trace and a synapse weight according to an example embodiment of the present disclosure;
Figure 7 schematically illustrates a circuit for storing an eligibility trace and updating a synapse weight according to an example embodiment of the present disclosure;
Figure 8 is a graph illustrating, on a logarithmic scale, an example of a drift in a resistance of a phase-change memory device over time;
Figure 9 schematically illustrates part of a spiking neural network comprising an array of synapse circuits according to a further example embodiment of the present disclosure;
Figure 10 is a cross-section view illustrating a metal stack of a synapse circuit according to an example embodiment of the present disclosure;
Figure 11 is a flow diagram illustrating operations in a method of generating an eligibility trace and a synapse weight according to a further example embodiment of the present disclosure; and
Figure 12 is a timing diagram illustrating the generation of an eligibility trace and of a synapse weight according to a further example embodiment of the present disclosure.

### Description of embodiments

Like features have been designated by like references in the various figures. In particular, the structural and/or functional features that are common among the various embodiments may have the same references and may dispose identical structural, dimensional and material properties.

Unless indicated otherwise, when reference is made to two elements connected together, this signifies a direct connection without any intermediate elements other than conductors, and when reference is made to two elements coupled together, this signifies that these two elements can be connected or they can be coupled via one or more other elements.

In the following disclosure, unless indicated otherwise, when reference is made to absolute positional qualifiers, such as the terms "front", "back", "top", "bottom", "left", "right", etc., or to relative positional qualifiers, such as the terms "above", "below", "higher", "lower", etc., or to qualifiers of orientation, such as "horizontal", "vertical", etc., reference is made to the orientation shown in the figures.

Unless specified otherwise, the expressions "around", "approximately", "substantially" and "in the order of" signify within 10 %, and preferably within 5 %.

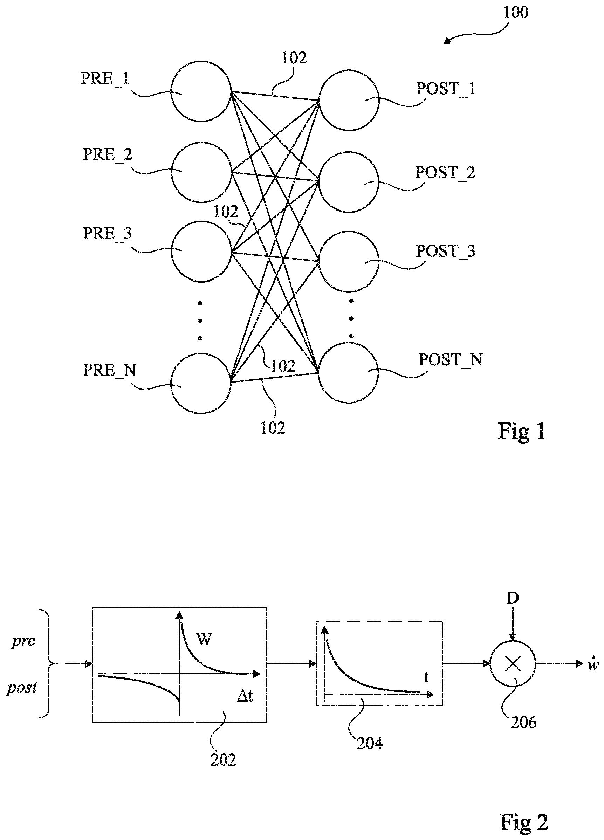

Figure 1 schematically illustrates part of an artificial neural network 100, which is for example a spiking neural network. The network 100 comprises PRE neurons PRE_1 to PRE_N and POST neurons POST_1 to POST_N coupled together by synapses 102, where N is for example equal to at least 2, and typically tens or hundreds. In the example of Figure 1, there are an equal number N of PRE neurons and POST neurons, but in some applications, the number could vary. The PRE neurons and POST neurons of Figure 1 for example represent successive layers of an artificial neural network, which could be a classifying network, or other type of network. While Figure 1 illustrates an example of a fully-connected network in which a synapse 102 connects each PRE neuron to each POST neuron, in alternative embodiments there could be less connections.

Each of the synapses 102 is for example implemented by a synapse circuit that receives a membrane voltage of the corresponding PRE neuron, applies a transfer function to this output based on a weight, and supplies an output excitation to the corresponding POST neuron.

A neural network comprising the PRE neurons and POST neurons of Figure 1 for example operates in two different phases. In a learning phase, the weights applied by each synapse are for example learnt, for example using a three-factor learning technique. For example, the learning is based on training data. In a functional phase, the neural network operates on real data in order to perform data analysis functions, such as classification, auto-association, etc. Alternatively, the neural network may operate according to an unsupervised continuous learning approach, in which case no training data is used, and the learning phase is thus avoided. Instead, learning continues over the lifetime of the network.

The three-factor learning technique is for example particularly suited to systems that are capable of operating continuously, for example by acquiring, processing and learning time-series data with 'always-on' and 'on-line learning' features, i.e. 'continuous learning', such techniques being well know to those skilled in art.

Figure 2 schematically illustrates a three-factor learning process according to an example embodiment. For example, such a technique is described in the publication by Frémaux and Gerstner entitled "Neuromodulated Spike-Timing-Dependent Plasticity, and Theory of Three-Factor Learning Rules", frontiers in Neural Circuits, Volume 9, Article 85, January 2016.

A block 202 represents a determination of pre-post coincidence, based on the relative timing of the pre and post neuron spikes. In particular, a value W is generated as a function of a time difference **Δ*t*** of the POST neuron spike with respect to the PRE neuron spike, the shorter this time, the higher the value W. For example, the function is based on a function of **1/Δ*t*.**

As represented by a block 204, a filtering function is for example applied to the value W such that the value decays with time. In this way, effects of correlation-based learning rules such as Spike-Timing-Dependent Plasticity (STDP), that depend on the pre/post-synaptic timing, are integrated in a so-called *eligibility trace* generated at the output of the filtering block 204.

As represented by a modulator 206, the result of the filtering function is for example modulated by a neuro-modulation value D to generate a change ***ẇ*** to be applied to the synaptic weight.

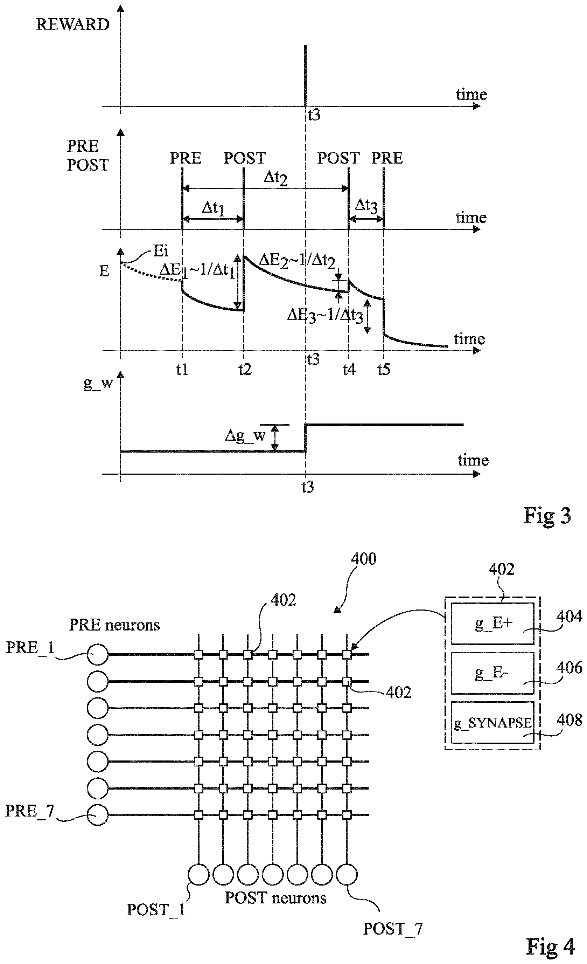

Figure 3 is a timing diagram illustrating an example of a reward signal and of the generation of an eligibility trace E and of a synapse weight g_w according to an example embodiment.

The reward signal is similar to the neuro-modulation value D of Figure 2, and indicates when an update to the synaptic weight g_w should be applied. The generation of a reward signal is for example described in more detail in the publication by Eugene M. Izhikevich entitled "Solving the Distal Reward Problem through Linkage of STDP and Dopamine Signaling", Cerebral Cortez October 2007, 17:2443-2452.

Figure 3 also shows examples of the PRE and POST neuron spikes.

In the example Figure 3, the eligibility trace E starts at an initial level Ei, and decays until a time t1, when a PRE neuron spike PRE occurs. A long-term depression (LTD) is for example applied in response to the PRE neuron spike. Assuming that a previous POST neuron spike was a relatively long time ago, the eligibility trace therefore falls by a relatively small value. The eligibility trace then continues to decay.

At a time t2, a POST neuron spike POST occurs. A long-term potentiation (LTP) is for example applied to the eligibility trace in response to the POST neuron spike. The eligibility trace is changed by a value **Δ*E*₁**, which is proportional to **1/Δ*t*₁**, where **Δ*t*₁ = *t*2 - *t*1.** The eligibility trace then continues to decay.

At a time t3, the reward signal REWARD for example spikes, causing the synaptic weight g_w to be modified by a value **Δ*****g_w**,* which is a function of the value of the eligibility trace at the time t3.

At a time t4, a POST neuron spike POST occurs. An LTP is for example applied to the eligibility trace in response to the POST neuron spike. The eligibility trace is changed by a value **Δ*E*₂**, which is proportional to **1/Δ*t*₂**, where **Δ*t*₂ = *t*4 - *t*1.** The eligibility trace then continues to decay.

At a time t5, a PRE neuron spike occurs. An LTD is for example applied to the eligibility trace because the PRE neuron spike occurs after a previous POST neuron spike. The eligibility trace is changed by a value **Δ*E*₃**, which is proportional to **1/Δ*t*₃**, where **Δ*t*₃** = ***t*5 - *t*4.** Given that the POST neuron spike at the time t4 occurs before the PRE neuron spike at the time t5, the change to the eligibility trace at the time t5 is a drop in its value. The eligibility trace then continues to decay.

There is a technical difficulty in implementing a three-facture learning rule as described above with reference to Figures 2 and 3. Indeed, it would be desirable to implement such a technique on-chip, for example for edge computing applications. However, this would require the eligibility trace to be stored for seconds or longer, depending on the length of the sequence of the desired time series. Furthermore, since the eligibility trace is the result of a correlation between the pre- and post-synaptic spikes, an integrator would be present per pre/post neuron pair. A capacitor could be used in CMOS technology, but in view of the relatively long time constants involves (seconds or more), the capacitor size would be large, i.e. up to 100 µm². Thus, such a solution would be very costly in terms of area. There is a need for a relatively compact and low-cost alternative implementation.

Figure 4 schematically illustrates part of a neural network, for example a spiking neural network, comprising an array 400 of synapse circuits 402 according to an example embodiment of the present disclosure. In the example of Figure 4, the array 400 couples seven PRE neurons PRE_1 to PRE_7 to seven POST neurons POST_1 to POST_7, and thus there are 49 synapse circuits 402 arranged in seven columns and seven rows. However, in alternative embodiments, there could be any number of PRE and POST neurons and the array 402 could be of a corresponding size. For example, there are at least two PRE neurons and at least two POST neurons. In some embodiments, the circuit of Figure 4 corresponds to a two-layer neural network. Alternatively, there could be one or more additional layers that are not illustrated.

Figure 4 also illustrates, on the right, an example of one of the synapse circuits 402 in more detail. Each of the synapse circuit 402 of the array for example comprises the same circuit. The synapse circuit 402 for example comprises three non-volatile memory devices 404, 406, 408.

The devices 404 and 406 for example respectively store positive and negative components g_E+, g_E- of the eligibility trace. In particular, the device 404 for example stores a positive correlation g_E+ of the pre and post synaptic neurons, and the device 406 for example stores a negative correlation g_E- of the pre and post synaptic neurons.

The term "positive correlation trace" designates a trace that decays over time and is for example selectively increased in response to a post-synaptic spike as a function of the time delay since a previous pre-synaptic spike.

The term "negative correlation trace" designates a trace that decays over time and is for example selectively increased in response to a pre-synaptic spike as a function of the time delay since a previous post-synaptic spike.

An eligibility trace is derived from the difference between positive and negative correlation traces, and indicates a change to be applied to the synaptic weight in response to a reward signal.

The memory devices 404, 406 are for example implemented by phase-change memory (PCM) devices. For example, the positive eligibility memory device 404 is selectively reset, for example by a strong reset operation as defined below, upon the arrival of each post-synaptic spike, and the negative eligibility memory device 406 is selectively reset, for example by a strong reset operation as defined below, upon the arrival of each pre-synaptic spike. The conductance of PCM devices in a reset state tends to decay over time due to a drift phenomenon.

Rather than being implemented by PCM devices, the memory devices 404 and 406 could each be a conductive bridging RAM (CBRAM) device, for example having a silver top electrode and an oxide or chalcogenide material as the resistive switching layer. As such, the CBRAM devices 404, 406 have a conductance that decays in time as a result of the diffusion of the silver ions, and hence it is advantageously exploited in order to store the positive and negative correlation traces. For example, the decay in conductance is achieved, in the case of CBRAM devices 404, 406, by applying weak SET operations. Indeed, for the case of CBRAM, a weak SET operation produces a more pronounced decay than a strong RESET operation. Those skilled in the art will understand how to choose an appropriate programming current and/or voltage during the SET operation of a CBRAM device in order to achieve a desired decay rate.

The device 408 for example stores the synaptic weight g_SYNAPSE applied by the synapse circuit 402. The device 408 is for example implemented by a PCM device, or other type of resistive random-access memory (ReRAM) device, such as an oxide RAM (OxRAM) device, which is based on so-called "filamentary switching".

Upon the arrival of the reward signal, the synaptic weight g_SYNAPSE stored by the device 408 is for example programmed based on the values of the positive and negative correlations g_E+, g_E-.

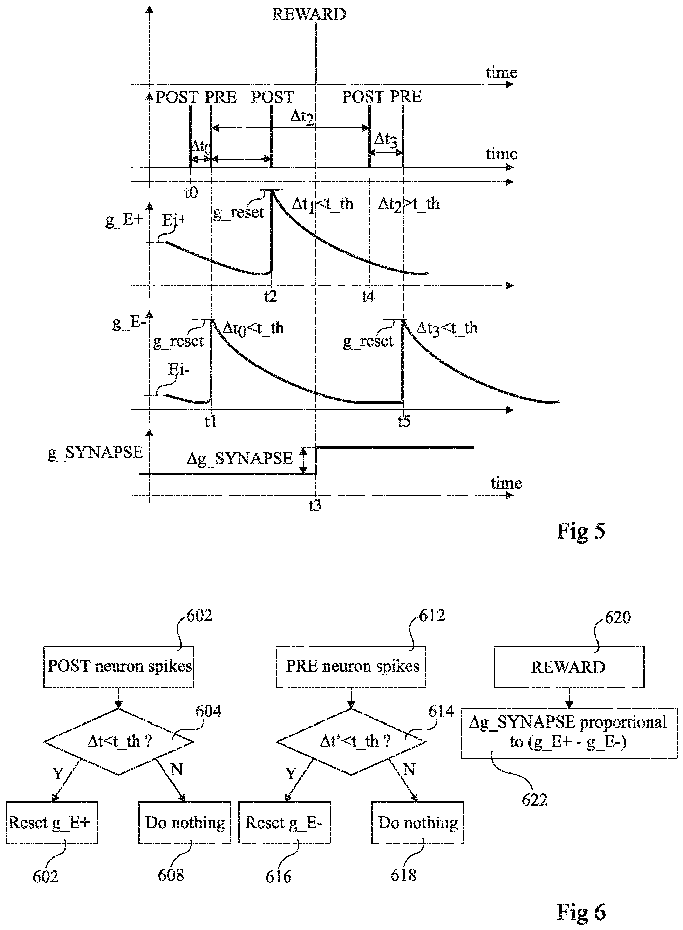

Figure 5 is a timing diagram illustrating the generation of an eligibility trace, and in particular of the positive correlation g_E+ and the negative correlation g_E-components of the eligibility trace, and of a synapse weight g_SYNAPSE, according to an example embodiment of the present disclosure. Each of these values g_E+, g_E- and g_SYNAPSE is for example represented by the conductance g of the corresponding device.

In the example Figure 5, the positive correlation eligibility trace g_E+ starts at an initial level Ei+, and the negative correlation eligibility trace g_E- starts at an initial level Ei-. Both of the traces decay due to the drift of the corresponding PCM device. Furthermore, in the example of Figure 5, rather than applying a positive change to the eligibility trace, the positive correlation trace g_E+ is reset if the time duration since the last PRE neuron spike was more than a given threshold t_th. Similarly, rather than applying a negative change to the eligibility trace, the negative correlation trace g_E- is reset if the time duration since the last POST neuron spike was more than the given threshold t_th.

At a time t0, a POST neuron spike POST occurs.

At a time t1, a PRE neuron spike PRE occurs. An LTD is for example applied because in this example the time interval Δ*t*₀ = *t*1 - *t*0 is lower than the time threshold t_th. The negative correlation trace g_E- is thus reset. This implies bringing the conductance of the device to a reset level g_reset. This trace g_E- then continues to decay as the conductance of the device 406 falls due to drift.

At a time t2, a POST neuron spike POST occurs. An LTP is for example applied because the time interval **Δ*t*₁ = *t*2 - *t*1** is lower than the time threshold t_th. The positive correlation trace g_E+ is thus reset. This implies bringing the conductance of the device to a reset level g_reset, which is for example substantially the same level as for the negative correlation trace g_E-. The trace g_E+ then continues to decay as the conductance of the device 404 falls due to drift.

At a time t3, the reward signal REWARD for example spikes, causing the synaptic weight g_SYNAPSE to be modified by a value **Δ*g*_*SYNAPSE***, which is a function of the positive and negative correlation traces g_E+, g_E-. For example, ***Δg_{SYNAPSE}* = *g_E*⁺(*t*3)** - ***g-E⁻*(*t*3)**, in other words the change to the synapse weight is equal to or proportional to the value of the positive correlation trace g_E+ at the time t3, minus the value of the negative correlation trace g_E- at the time t3.

At a time t4, a POST neuron spike POST occurs. An LTP is not applied this time because in this example the time interval **Δ*t*₂ = *t*4 - *t*1** is greater than the threshold t_th.

At a time t5, a PRE neuron spike occurs. An LTD is for example applied because the time interval **Δ*t*₃** = ***t*5 - *t*4** is lower than the time threshold t_th. The negative correlation trace g_E- is thus reset. This trace g_E- then continues to decay.

Figure 6 is a flow diagram illustrating operations in a method of generating an eligibility trace and a synapse weight according to an example embodiment of the present disclosure.

A flow on the left in Figure 6 represents the case of a POST neuron spike, as shown by an event 602. In this case, in an operation 604, it is determined whether the time interval **Δ*t*** is less than the threshold t_th. This time interval **Δ*t*** is equal to t_POST-t_PRE, where t_POST is the time of the POST neuron spike, and t_PRE is the time of the PRE neuron spike. If so (branch Y), in an operation 606, the positive correlation trace g_E+ is reset. If not (branch N), nothing is done (block 608).

A flow in the middle in Figure 6 represents the case of a PRE neuron spike, as shown by an event 612. In this case, in an operation 614, it is determined whether the time interval **Δ*t'*** is less than the threshold t_th. This time interval **Δ*t'*** is equal to t_PRE-t_POST. If so (branch Y), in an operation 616, the negative correlation trace g_E- is reset. If not (branch N), nothing is done (block 618).

A flow on the right of Figure 6 represents the case of a reward spike, as shown by an event 620. In this case, in an operation 622, a change ***Δg_SYNAPSE*** is applied to the synaptic weight g_SYNAPSE, this change for example being proportional to g_E+ minus g_E-.

The example of Figure 6 involves the use of a same reset in the operations 602 and 616, in other words a reset operation that results in a same or similar conductance level of the corresponding memory device following reset. In alternative embodiments, it would be possible to apply a reset in the operations 602 and 616 in an analog manner that depends on the time interval. For example, in operation 602, a programming voltage and/or current applied to the memory device 404 is proportional to 1/**Δ*t***, and in operation 616, a programming voltage and/or current applied to the memory device 406 is proportional to 1/**Δ*t'***.

Furthermore, it will be noted that, if **Δ*t*** is relatively high, the programming current or voltage will be relatively small, and may be considered to have no effect. In such a case, rather than comparing **Δ*t*** with the threshold t_th in the operation 604, it would be possible to replace the operations 602 and 604 by a single operation in which, following a POST neuron spike, g_E+ is RESET with a programming current or voltage that is proportional to 1/**Δ*t***. Similarly, rather than comparing **Δ*t'*** with the threshold t_th in the operation 614, it would be possible to replace the operations 614 and 616 by a single operation in which, following a PRE neuron spike, g_E- is RESET with a programming current or voltage that is proportional to 1/**Δ*t'***.

The example of Figure 6 is based for example on the use of PCM devices as the devices 404 and 406. In the cases that these devices 404, 406 are implemented by CBRAM devices, SET operations are for example used instead of RESET operations, wherein the programming voltage and/or current applied to the memory device 404 during the SET operation is for example proportional to 1/**Δ*t***, and the programming voltage and/or current applied to the memory device 406 during the SET operation is for example is proportional to 1/**Δ*t'***.

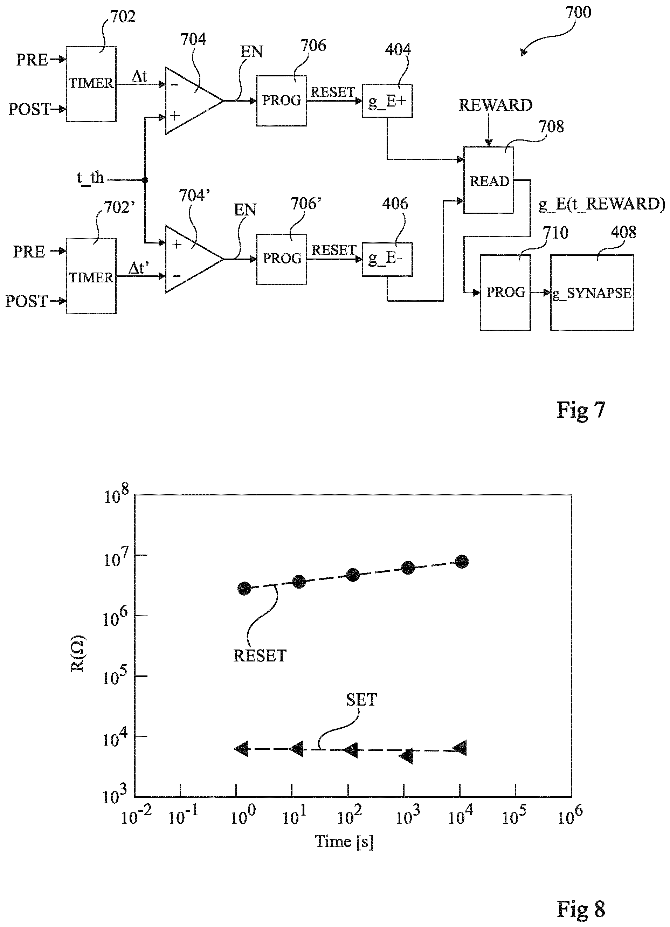

Figure 7 schematically illustrates a circuit 700 for storing an eligibility trace and updating a synapse weight according to an example embodiment of the present disclosure. For example, the circuit 700 implements the operations of the flow diagram of Figure 6. In some embodiments, there is a corresponding circuit 700 implemented for each synapse circuit 402.

A timer (TIMER) 702 for example receives the signal PRE from the pre-synapse neuron, and the signal POST from the post-synapse neuron. These signals are for example the output voltages of each of these neurons. The timer 702 is for example configured to time the interval between t_PRE and t_POST, and to output the result **Δ*t*** in response to the occurrence of the post-synaptic spike POST.

A comparator 704 for example receives the time interval **Δ*t*** from the timer 702, and is configured to compare the time interval with the time threshold t_th. If **Δ*t* < *t*_*th***, the output EN of the comparator 704 is asserted.

For example, the timer 702 is implemented by a counter that is configured to start counting periods of a clock signal when the PRE spike occurs, and to stop counting and output the resulting count value when the POST spike occurs. The count value then provides an indication of **Δ*t***, and this count value is for example compared, using the comparator 704, with the threshold t_th, which is also for example a digital value.

Alternatively, an analog implementation of the timer 702 could be used, such as the use of a current source, e.g. a gated current mirror, to charge or discharge a capacitor. The level of the capacitor voltage thus provides an indication of **Δ*t***, and this voltage level is for example compared with the threshold level t_th, which is for example an analog voltage level, using the comparator 704.

A programming circuit (PROG) 706 for example receives, at an enable input, the signal EN from the comparator 704, and is configured to apply a reset (RESET) operation to the PCM memory device 404 in response to the enable signal EN being asserted.

A timer (TIMER) 702' for example receives the signal POST from the post-synapse neuron, and the signal PRE from the pre-synapse neuron. The timer 702' is for example configured to time the interval between t_POST and t_PRE, and to output the result **Δ*t'*** in response to the occurrence of the post-synaptic spike PRE. A comparator 704' for example receives the time interval **Δ*t'*** from the timer 702', and is configured to compare the time interval with the time threshold t_th. If **Δ*t'*** < **t_th**, the output EN of the comparator 704' is asserted.

For example, the timer 702' and comparator 704' are implemented in a similar fashion to the timer 702 and comparator 704 as described above.

A programming circuit (PROG) 706' for example receives, at an enable input, the signal EN from the comparator 704', and is configured to apply a reset (RESET) operation to the PCM memory device 406 in response to the enable signal EN being asserted.

A read circuit (READ) 708 is for example configured to read a conductance level of each of the devices 404, 406 in response to the reward signal REWARD being asserted. The read circuit 708 is for example configured to generate an eligibility value g_E(t_REWARD) at the time of the reward spike by subtracting the value read from the device 406 from the value read from the device 404. For example, reading each device 404, 406 involves applying a fixed voltage across each device to generate currents that are a function of the conductance of each device. A difference between these currents is for example applied to a resistor in order to generate a voltage corresponding to the value G_E(t_REWARD).

The phase-change memory devices 404, 406 are for example chalcogenide-based devices, in which the resistive switching layer is formed of polycrystalline chalcogenide, placed in contact with a heater.

As known by those skilled in the art, a reset operation of a PCM device involves applying a relatively high current through the device for a relatively short duration. For example, the duration of the current pulse is of less than 10 ns. This causes a melting of a resistive switching layer of the device, which then changes from a crystalline phase to an amorphous phase, and cools in this amorphous phase, having a relatively high electrical resistance. Furthermore, this resistance increases with time following the reset operation, corresponding to a decrease in the conductance of the device. Such a drift is for example particularly apparent when the device is reset using a relatively high current, leading to a relatively high initial resistance, and a higher subsequent drift. Those skilled in the art will understand how to measure the drift that occurs based on different reset states, i.e. different programming currents, and will then be capable of choosing a suitable programming current that results in an amount of drift that can be exploited as described herein.

The reset operations performed by the programming circuits 706, 706' are for example resets performed while the devices 404 and 406 are already in the reset state, and will cause a reduction in the resistances of the devices 404, 406. The reset operation is for example a strong reset, implying that an active region of the PCM device, formed for example of chalcogenide material, is brought to the amorphous state. As known by those skilled in the art, the "active region" is the region of the PCM material that is involved in crystallization/amorphization transitions during the programming operations. The duration and amplitude of the current pulse for achieving such a strong reset will vary depending on the particular structure of the device, and those skilled in the art will understand how to choose appropriate levels.

As also known by those skilled in the art, a set operation of a PCM device involves applying a current that is generally lower than the current applied during the reset operation, for a longer duration, such that the active region crystallizes. For example, the duration of the current pulse is of more than 100 ns. This for example causes the resistive switching layer of the device to change from the amorphous phase back to the crystalline phase. The resistance of the device is thus relatively low.

Figure 8 is a graph illustrating, on a logarithmic scale, an example of a drift in a resistance of a phase-change memory device over time in the set (SET) and reset (RESET) states. It can be seen that, whereas the resistance varies relatively little in the set state, there is a relatively high increase over time in the reset state. For example, the resistance R in both the set and reset states substantially follows the model ***R* = *R*₀(*t*/*t*₀)*^{ν}***, where ***R*₀** is the initial resistance at time ***t*₀**. In the case of the set state, the parameter *ν* is for example of less than 0.01, whereas for the reset state, the parameter *ν* is for example over 0.1, and for example equal to around 0.11.

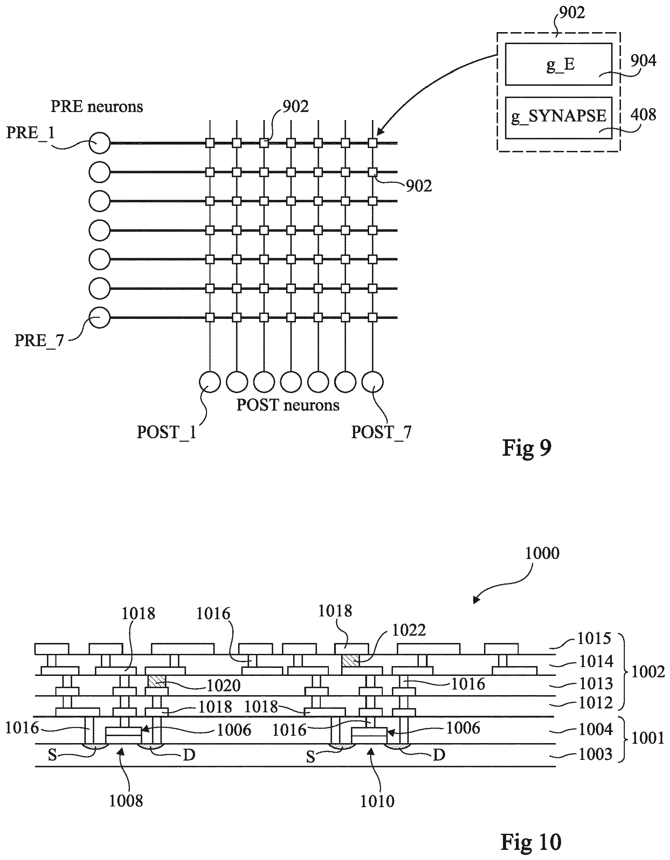

Figure 9 schematically illustrates an array 900 of synapse circuits 902 according to a further example embodiment of the present disclosure. The array 900 is similar to the array 400 of Figure 4, and like features are labelled with like reference numerals, and will not be described again in detail. Like for Figure 4, in some embodiments, the circuit of Figure 9 corresponds to a two-layer neural network. Alternatively, there could be one or more additional layers that are not illustrated.

However, in the array 900, the synapse circuits 402 are replaced by synapse circuits 902, which comprise a volatile memory device 904 replacing the devices 404 and 406, in addition to the non-volatile device 408. The volatile memory device 904 is a device having a conductance that can both increased and decreased.

For example, the memory device 904 is a conductive bridging RAM (CBRAM) device, for example having a silver top electrode and an oxide or chalcogenide material as the resistive switching layer. As such, the CBRAM device 904 has a conductance that decays in time as a result of the diffusion of the silver ions, and hence it is advantageously exploited in order to store the eligibility trace.

Figure 10 is a cross-section view illustrating a metal stack of a synapse circuit 1000 according to an example embodiment of the present disclosure, and illustrates in particular an example of the co-integration of two types of resistive memory devices. For example, such a structure is used to form the synapse circuit 902 of Figure 9 in which the memory device 904 is a conductive bridging RAM (CBRAM) device, and the device 408 is a PCM device, or other type of resistive random-access memory device, such as an oxide RAM device.

The synapse circuit 1000 for example comprises a transistor layer 1001 and a metal stack 1002

The transistor layer 1001 is formed of a top region 1003 of a silicon substrate in which transistor sources and drains S, D, are formed, and a transistor gate layer 1004 in which gate stacks 1006 of the transistors are formed. Two transistors 1008, 1010 are illustrated in the example of Figure 10.

The metal stack 1002 comprises four interconnection levels 1012, 1013, 1014 and 1015 in the example of Figure 10, each interconnection level for example comprising a patterned metal layer 1018 and metal vias 1016 coupling metal layers, surrounded by a dielectric material. Furthermore, metal vias 1016 for example extend from the source, drain and gate contacts of the transistors 1008, 1010 to the metal layer 1018 of the interconnection level 1012.

In the example of Figure 10, a restive memory device 1020 of a first type, such as of the PCM type, is formed in the interconnection level 1013, and for example extends between the metal layers 1018 of the interconnection levels 1013 and 1014. This device 1020 is for example a non-volatile memory device, and for example implements the device 408 of Figure 9.

A resistive memory device 1022 of a second type, such as of the filamentary switching type, is formed in the interconnection level 1014, and for example extends between the metal layers 1018 of the interconnection levels 1014 and 1015. This device 1022 is for example a volatile memory device, and for example implements the device 904 of Figure 9.

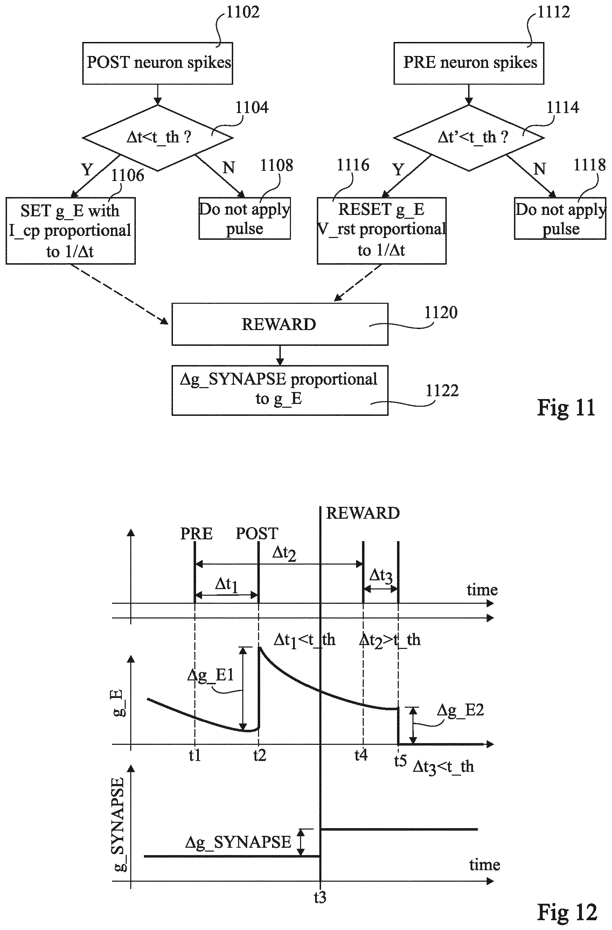

Figure 11 is a flow diagram illustrating operations in a method of generating an eligibility trace and a synapse weight according to a further example embodiment of the present disclosure, based on the synapse circuit 902 of Figure 9.

A flow on the left in Figure 11 represents the case of a POST neuron spike, as shown by an event 1102. In this case, in an operation 1104, it is determined whether the time interval **Δ*t*** is less than the threshold t_th. This time interval **Δ*t*** is equal to t_POST-t_PRE, where t_POST is the time of the POST neuron spike, and t_PRE is the time of the PRE neuron spike. If so (branch Y), there is a correlation inversely proportional to **Δ*t***, and thus in an operation 1106, a SET pulse is applied to the device 904 with a compliance current inversely proportional to **Δ*t*,** increasing its conductance g_E accordingly. If **Δ*t*** is greater than the threshold t_th (branch N), no pulse is applied (block 1108).

A flow on the right in Figure 11 represents the case of a PRE neuron spike, as shown by an event 1112. In this case, in an operation 1114, it is determined whether a time interval **Δ*t'*** is less than the threshold t_th. This time interval **Δ*t'*** is equal to t_PRE-t_POST. If so (branch Y), there is a correlation inversely proportional to **Δ*t***, and thus in an operation 1116, a reset pulse is for example applied to the device 904, with a voltage Vreset that is inversely proportional to dt, thereby decreasing the conductance g_E of the device 904 accordingly. If **Δ*t*** is greater than the threshold t_th (branch N), no pulse is applied (block 1118).

It will be noted that in Figure 11, the programming current applied in the SET operation 1106, and the programming voltage applied in the RESET operation 1116, are proportional to 1/**Δ*t***. As such, if t is relatively high, the programming current or voltage will be relatively small, and may be considered to have no effect. In such a case, rather than comparing **Δ*t*** with the threshold t_th in the operations 1104 and 1114, it would be possible to replace the operations 1104, 1106 and 1108 by a single operation in which, following a POST neuron spike, g_E is SET with I_cp proportional to 1/**Δ*t***, and similarly, the operations 1114, 1116 and 1118 are replaced by a single operation in which, following a PRE neuron spike, g_E is RESET with V_rst proportional to 1/**Δ*t***.

A flow at the bottom of Figure 11 illustrates the case of a reward spike, as shown by an event 1120. In this case, in an operation 1122, a change **Δ*g*_*SYNAPSE*** is applied to the synaptic weight g_SYNAPSE, this change for example being proportional to g_E.

The operations of Figure 11 could be implemented by a circuit similar to that of Figure 7, but in which the programming circuits 706 and 706' each program the same device 904, the circuit 706 applying a current pulse as described in relation to operation 1106 of Figure 11, and the circuit 706' applying a reset voltage as described in relation with operation 1116 of Figure 11. Furthermore, to update the synaptic weight g_SYNAPSE, the read circuit 708 is for example configured to read only the conductance of the device 904, and to generate the value g_E(t_REWARD) based on this conductance.

Figure 12 is a timing diagram illustrating an example of the generation of the eligibility trace g_E of Figures 9 and 11, and of a synapse weight according to a further example embodiment of the present disclosure.

At a time t1, a PRE neuron spike PRE occurs.

At a time t2, a POST neuron spike POST occurs. An LTP is for example applied because the time interval **Δ*t*₁** = ***t*2** - ***t*1** is lower than the time threshold t_th. The eligibility trace g_E is thus increased, for example by an amount **Δg**_***E*1** that is inversely proportional to **Δ*t*₁*.*** The eligibility trace g_E then continues to decay.

At a time t3, the reward signal REWARD for example spikes, causing the synaptic weight g_SYNAPSE to be modified by a value **Δ*g*_*****SYNAPSE**,* which is a function of the eligibility trace g_E. For example, **Δ*g_{SYNAPSE}* = *g_{E}*(*t*3).**

At a time t4, a POST neuron spike POST occurs. An LTP is not applied this time because the time interval **Δ*t*₂** = **t*4 - t*1** is greater than the threshold t_th.

At a time t5, a PRE neuron spike occurs. An LTD is for example applied because the time interval **Δ*t*₃** = ***t*5** - ***t*4** is lower than the time threshold t_th. The eligibility trace g_E is thus decreased, for example by an amount **Δ*g*_*E*2** that is inversely proportional to **Δ*t*₃.** In this example, this reduction brings the conductance to a minimum value.

An advantage of the embodiments described herein is that the decay of an eligibility trace can be implemented in a simple, low-cost and compact fashion using the drift or decay property of a resistive switching memory device. Furthermore, in the case that the technology of the resistive switching memory device does not permit the conductance to be both increased and decreased, an advantageous solution as described herein is to provide one memory device for each case, and to perform a subtraction between the traces.

Various embodiments and variants have been described. Those skilled in the art will understand that certain features of these embodiments can be combined and other variants will readily occur to those skilled in the art. For example, while embodiments have been described in which the eligibility trace is updated according to the spike-time-dependent plasticity rule, alternative rules could be applied. For example, the eligibility trace could be updated according to the so-called Fusi rule. According to this rule, the amount by which the eligibility trace is changed depends on the state of the post-synaptic neuron, such as on the membrane potential v(t) of the post-synaptic neuron. For example, at a pre-synaptic spike, the eligibility trace g_E is modified by **+Δ*g*** if v(t)>V_th+, or by **-Δ*g*** if v(t)<V_th-, where V_th+ and V_th- are threshold voltages, which may or may not be the same.

## Claims

1. A synapse circuit of a spiking neural network comprising:
- at least one resistive switching memory device (404, 406, 904) having a conductance that decays over time;
- at least one programming circuit (706, 706', 710) configured to store an eligibility trace by programming a resistive state of each of the at least one resistive switching memory device, wherein the at least one programming circuit (706, 706', 710) is configured to store the eligibility trace by programming the at least one resistive switching memory device (404, 406, 904) to store a positive correlation trace (g_E+) and a negative correlation trace (g_E-); and
- a further resistive switching memory device (408) configured to store a synaptic weight (g_SYNAPSE), wherein the at least one programming circuit (706, 706', 710) is further configured to update the synaptic weight in response to a reward signal (REWARD), the synaptic weight being updated as a function of a measured resistance of each of the at least one resistive switching memory device ((404, 406, 904), wherein a change applied to the synaptic weight is proportional to the value of the positive correlation trace (g_E+) minus the value of the negative correlation trace (g_E-).

2. The synapse circuit of claim 1, wherein the at least one resistive switching memory device (404, 406) comprises a first resistive switching memory device (404) and a second resistive switching memory device (406), and the at least one programming circuit (706, 706', 710) is configured to store the eligibility trace by programming the first resistive switching memory device (404) to store the positive correlation trace (g_E+) and the second resistive switching memory device (406) to store the negative correlation trace (g_E-).

3. The synapse circuit of claim 2, wherein the at least one programming circuit (706, 706', 710) is configured:
- to store the positive correlation trace by selectively resetting a resistive state of the first resistive switching memory device (404) in response to the occurrence of a post-synaptic spike (POST); and
- to store the negative correlation trace by selectively resetting a resistive state of the second resistive switching memory device (406) in response to the occurrence of a pre-synaptic spike (PRE).

4. The synapse circuit of claim 3, wherein the at least one programming circuit (706, 706', 710) is configured:
- in response to the occurrence of a post-synaptic spike (POST), to determine whether a time interval since a previous pre-synaptic spike (PRE) is less than a threshold (t_th), and if so, to reset the resistive state of the first resistive switching memory device (404); and
- in response to the occurrence of a pre-synaptic spike (PRE), to determine whether a time interval since a previous post-synaptic spike (POST) is less than the threshold (t_th), and if so, to reset the resistive state of the second resistive switching memory device (406).

5. The synapse circuit of any of claims 2 to 4, wherein the at least one programming circuit (706, 706', 710) is configured:
- to store the positive correlation trace by applying a first set or reset operation to the first resistive switching memory device (404) in response to the occurrence of a post-synaptic spike (POST), wherein the at least one programming circuit (706, 706', 710) is configured to apply a programming current or voltage during the first set or reset operation that is inversely proportional to a time interval (**Δ*t***) since a previous pre-synaptic spike (PRE); and
- to store the negative correlation trace by applying a second set or reset operation to the second resistive switching memory device (406) in response to the occurrence of a pre-synaptic spike (PRE), wherein the at least one programming circuit (706, 706', 710) is configured to apply a programming current or voltage during the second set or reset operation that is inversely proportional to a time interval (**Δ*****t**'*) since a previous post-synaptic spike (POST).

6. The synapse circuit of any of claims 1 to 5, wherein each of the at least one resistive switching memory device (404, 406, 904) is a phase-change memory device.

7. The synapse circuit of any of claims 2 to 5, wherein the first and second resistive switching memory devices (404, 406) are phase-change memory devices, and the at least one programming circuit (706, 706', 710) is configured to apply each reset operation of the first and second resistive switching memory devices (404, 406) as a strong reset operation that causes an active region of the device to be brought to an amorphous state.

8. The synapse circuit of claim 6 or 7, wherein the further resistive switching memory device (408) is a phase-change memory device or an oxide random access memory (OxRAM) device.

9. The synapse circuit of claim 1 or 2, wherein each of the at least one resistive switching memory device (404, 406, 904) is a conductive-bridging random-access memory devices, and the further resistive switching memory device is an oxide random access memory (OxRAM) device.

10. The synapse circuit of claim 2, wherein the first and second resistive switching memory devices (404, 406) are conductive-bridging random-access memory devices, and the at least one programming circuit (706, 706', 710) is configured:
- to store the positive correlation trace by selectively setting a resistive state of the first resistive switching memory device (404) using a weak set operation in response to the occurrence of a post-synaptic spike (POST); and
- to store the negative correlation trace by selectively setting a resistive state of the second resistive switching memory device (406) using a weak set operation in response to the occurrence of a pre-synaptic spike (PRE).

11. A spiking neural network comprising a plurality of pre-synaptic neurons each coupled to at least one post-synaptic neuron via a corresponding synapse circuit implemented according to any of claims 1 to 10.

12. A method comprising:
- storing, by at least one programming circuit (706, 706', 710), an eligibility trace associated with a synapse circuit of a spiking neural network using at least one resistive switching memory device (404, 406, 904) each having a conductance that decays over time, wherein the at least one programming circuit is configured to store the eligibility trace by programming the at least one resistive switching memory device (404, 406, 904) to store a positive correlation trace (g_E+) and a negative correlation trace (g_E-);
- storing, by the at least one programming circuit (706, 706', 710), a synaptic weight (g_SYNAPSE) to a further resistive memory device (408); and
- updating the synaptic weight in response to a reward signal (REWARD), the synaptic weight being updated as a function of a measured resistance of each of the at least one resistive switching memory device, wherein a change applied to the synaptic weight is proportional to the value of the positive correlation trace (g_E+) minus the value of the negative correlation trace (g_E-).

13. The method of claim 12, wherein the at least one resistive switching memory device (404, 406) comprises a first resistive switching memory device (404) and a second resistive switching memory device (406), and storing the eligibility trace comprises programming, by the at least one programming circuit (706, 706', 710), the first resistive switching memory device (404) to store the positive correlation trace (g_E+) and programming, by the at least one programming circuit (706, 706', 710), the second resistive switching memory device (406) to store the negative correlation trace (g_E-).

14. The method of claim 13, wherein:
- storing the positive correlation trace comprises selectively resetting a resistive state of the first resistive switching memory device (404) in response to the occurrence of a post-synaptic spike (POST); and
- storing the negative correlation trace comprises selectively resetting a resistive state of the second resistive switching memory device (406) in response to the occurrence of a pre-synaptic spike (PRE).

15. The method of claim 13 or 14, wherein:
- storing the positive correlation trace comprises, in response to the occurrence of a post-synaptic spike (POST), determining whether a time interval since a previous pre-synaptic spike (PRE) is less than a threshold (t_th), and if so, resetting the resistive state of the first resistive switching memory device (404); and
- storing the negative correlation trace comprises, in response to the occurrence of a pre-synaptic spike (PRE), determining whether a time interval since a previous post-synaptic spike (POST) is less than the threshold (t_th), and if so, resetting the resistive state of the second resistive switching memory device (406).

16. The method of claim 14 or 15, wherein:
- storing the positive correlation trace comprises applying a first set or reset operation to the first resistive switching memory device (404) in response to the occurrence of a post-synaptic spike (POST), wherein the at least one programming circuit (706, 706', 710) is configured to apply a programming current or voltage during the first set or reset operation that is inversely proportional to a time interval (1/**Δ*t***) since a previous pre-synaptic spike (PRE); and
- storing the negative correlation trace comprises applying a second reset operation to the second resistive switching memory device (406) in response to the occurrence of a pre-synaptic spike (PRE), wherein the at least one programming circuit (706, 706', 710) is configured to apply a programming current or voltage during the second reset operation that is inversely proportional to a time interval (1/**Δ*****t**'*) since a previous post-synaptic spike (POST).
